# EUROPEAN PATENT APPLICATION

(11) **EP 1 176 438 A1**
(43) Date of publication of application: **30.01.2002**
(21) Application number: 00902867.1
(22) Date of filing: 09.02.2000
(51) Int. Cl.: G02B 6/12, G02B 26/00, G02F 1/313

(54) **OPTICAL WAVEGUIDE WAVELENGTH FILTER WITH RING RESONATOR AND 1xN OPTICAL WAVEGUIDE WAVELENGTH FILTER**

(30) Priority: 09.02.1999 JP 3107299
(71) Applicant: KANAGAWA ACADEMY OF SCIENCE AND TECHNOLOGY, Kanagawa 213-0012 (JP)
(72) Inventor: Chu, Sai Tak, North York, Ontario M2J 2B9 (CA); Little, Brent E., Boston, MA 02115 (US); Pan, Wugen, Atsugi-shi, Kanagawa 243-0036 (JP); Kaneko, Taro, Kanagawa 228-0024 (JP); Kokubun, Yasuo, Yokohama-shi, Kanagawa 247-0009 (JP); Sato, Shinya, Noboribetsu-shi, Hokkaido 059-0032 (JP)
(74) Representative: Dixon, Philip Matthew
(86) International application number: JP0000701
(87) International publication number: WO0048026

(57) **Abstract**

A novel optical waveguide wavelength filter with a ring resonator (3) in which an ADD/DROP operation between an input-side optical waveguide (1) and an output-side optical waveguide (2) through the ring resonator (3) is performed, wherein the input-side optical waveguide (1) intersects the output-side optical waveguide (2), and the ring resonator (3) is superposed on the input- and output-side optical waveguides (1, 2), whereby a 1xN optical waveguide wavelength filter is easily realized. A 1xN optical waveguide wavelength filter composed of such an optical waveguide wavelength filter, having a small size, and having an excellent filter response is also disclosed.

## Description

### Technical Field

The present invention relates to an optical waveguide wavelength filter with a ring resonator, a 1xN optical waveguide wavelength filter and an optical waveguide optical switch. More specifically, the present invention relates to a novel optical waveguide wavelength filter with a ring resonator capable of realizing a 1xN optical waveguide wavelength filter, a novel 1xN optical waveguide wavelength filter composed of such an optical waveguide wavelength filter with a ring resonator, which has a small size and an excellent filter response and an optical switch composed of these wavelength filters.

### Background Art

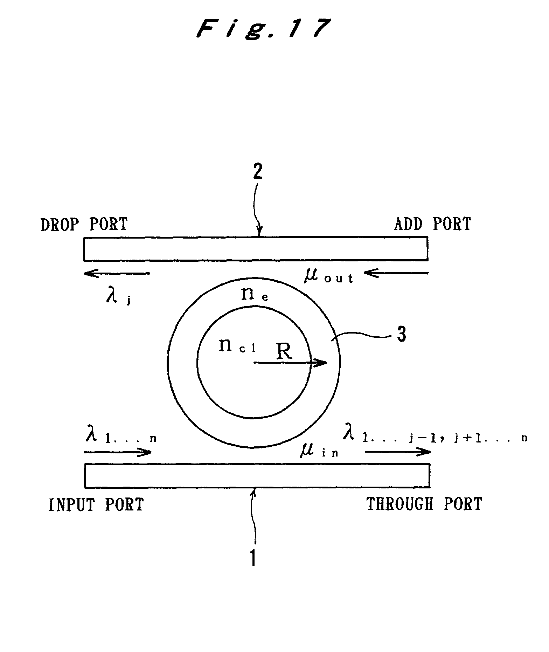

As an optical waveguide wavelength filter in which an ADD/DROP operation is performed by moving an optical signal with a specific wavelength between each optical waveguide, there has been known an optical waveguide wavelength filter having a ring, resonator (3) between an input-side optical waveguide (1) and an output-side optical waveguide (2) as shown in FIG. 17.

In this optical waveguide wavelength filter with a ring resonator, the ring resonator (3) serves as an optical coupler between the input-side optical waveguide (1) and the output-side optical waveguide (2). When wavelength multiple optical signals λ₁ ... ₙ enter into an input port of the input-side optical waveguide (1), only an optical signal λ₁ having a wavelength identical with a resonance wavelength of the ring resonator (3) moves to the output-side optical waveguide (2) through the ring resonator (3) to be emitted from a DROP port. The optical signals having other wavelengths λ_{1 ··· j-1, j+1 ··· n} flow into a through port of the input-side optical waveguide (1). On the other hand, the optical signal entered from an ADD port of the output-side optical waveguide (2) flows into the through port of the input-side optical waveguide (1) only when the wavelength thereof is identical with the resonance wavelength of the ring resonator (3).

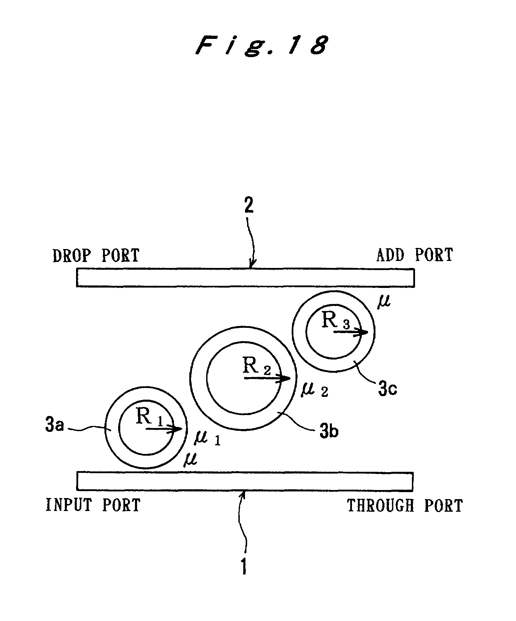

Additionally, in such an optical waveguide wavelength filter with a ring resonator, as shown in FIG. 18, a plurality of ring resonators (3a), (3b), (3c) ··· (three ring resonators in an example of FIG. 18) may be provided between the input-side optical waveguide (1) and the output-side optical waveguide (2) . In this case, the filter response is capable of taking out only one peak wavelength from a wavelength property which becomes a periodic wavelength property in a single ring resonator and realizing a box-shape property or the like.

In recent years, along with a notable development of a high informationalization, an optical communication with a larger capacity and a higher function is strongly desired. In order to realize such an optical communication, it is needed to develop so-called a 1xN wavelength filter capable of individually combining and separating a plurality of optical signals among the input multiple optical signals in the wavelength division multiplexing.

However, the conventional optical waveguide wavelength filter with a ring resonator shown in FIGS. 17 and 18 can combine and separate only a single wavelength optical signal among the input multiple optical signals, so that in order to compose the 1xN wavelength filter, a plurality of optical waveguide wavelength filters with a ring resonator must be connected to each other with the use of a curved waveguide or the like. Consequently, the high-density integration cannot be realized easily.

### Disclosure of Invention

The present invention has been made taking the foregoing problems into consideration, an object of which is to provide a novel optical waveguide wavelength filter with a ring resonator as described below in order to solve the above described problems in the conventional art and to realize a 1xN wavelength filter.

The present invention provides an optical waveguide wavelength filter with a ring resonator, in which an ADD/DROP operation between an input-side optical waveguide and an output-side optical waveguide through the ring resonator is performed, wherein the input-side optical waveguide intersects the output-side optical waveguide, and the ring resonator is superposed on the input-side optical waveguide and the output-side optical waveguide (claim 1). There are also provided embodiments such that, in this optical waveguide wavelength filter, the input-side optical waveguide intersects the output-side optical waveguide at a 90-degree angle (claim 2), and a plurality of ring resonators coupled to each other is provided (claim 3).

Further, the present invention provides a 1xN optical waveguide wavelength filter, comprising a plurality of the above optical waveguide wavelength filters with a ring resonator, each connected in such a manner that a through bus and an input bus of the adjacent optical waveguide wavelength filters with a ring resonator are connected to each other, wherein the resonance wavelengths of the ring resonators of the optical waveguide wavelength filters with a ring resonator are different from each other (claim 4). There is also provided an embodiment such that, in this 1xN optical waveguide wavelength filter, the optical waveguide wavelength filter with a ring resonator located at the farthest end is connected with the other optical waveguide wavelength filter with a ring resonator adjacent thereto by connecting a DROP bus of the output-side optical waveguide of the farthest end optical waveguide wavelength filter with a ring resonator and an input bus of the input-side optical waveguide of the adjacent optical waveguide wavelength filter with a ring resonator, and the resonance wavelength of the ring resonator of the farthest end optical waveguide wavelength filter with a ring resonator and that of the adjacent optical waveguide wavelength filter with a ring resonator are identical or different to each other (claim 5).

Further, there is provided an embodiment such that, in the above optical waveguide wavelength filter with a ring resonator and the above 1xN optical waveguide wavelength filter, a core layer or a clad layer or both layers of the respective optical waveguides are composed of a material having an electro-optic effect or a material having a thermo-optic effect or a material having a photoelastic effect, and the resonance wavelength of the ring resonator is variable in accordance with the control of the exterior electric field or the control of the temperature or the control of the exterior stress (claim 6).

Additionally, the present invention provides an optical switch which is configured by the above optical waveguide wavelength filter with a ring resonator or the above 1xN optical waveguide wavelength filter, wherein a core layer or a clad layer or both layers of the respective optical waveguides are composed of a material having an electro-optic effect or a material having a thermo-optic effect or a material having a photoelastic effect, and the resonance wavelength of the ring resonator is variable in accordance with the control of the exterior electric field or the control of the temperature or the control of the exterior stress (claim 7).

### Brief Description of Drawings

FIG. 1 is a perspective view showing a substantial part of an optical waveguide wavelength filter with a ring resonator according to an embodiment of the present invention;
FIG. 2 is a plan view showing a substantial part of the optical waveguide wavelength filter with a ring resonator in FIG. 1;
FIG. 3 is a cross sectional view showing a substantial part of the optical waveguide wavelength filter with a ring resonator in FIG. 1;
FIG. 4 is a perspective view showing a substantial part of an embodiment of an optical waveguide wavelength filter with two ring resonators;
FIG. 5 is a perspective view showing a substantial part of an embodiment of an optical waveguide wavelength filter with three ring resonators;
FIG. 6 is a diagram illustrating an example of a filter response in the optical waveguide wavelength filter with three ring resonators in FIG. 5;
FIG. 7 is a plan view showing a substantial part of an embodiment of a 1xN optical waveguide wavelength filter according to the present invention;
FIG. 8 is a perspective view showing a substantial part of an embodiment of a 1xN optical waveguide wavelength filter, comprising two optical waveguide wavelength filters with a ring resonator connected to each other;
FIG. 9 is a perspective view showing a substantial part. of an embodiment of a 1xN optical waveguide wavelength filter, wherein each of the optical waveguide wavelength filters with a ring resonator has two ring resonators;
FIG. 10 is a perspective view showing a substantial part of an embodiment of a 1xN optical waveguide wavelength filter, wherein each of the optical waveguide wavelength filters with a ring resonator has three ring resonators;
FIG. 11 is a plan view showing a substantial part of another embodiment of a 1xN optical waveguide wavelength filter according to the present invention;
FIG. 12 is a plan view showing a substantial part of still another embodiment of a 1xN optical waveguide wavelength filter according to the present invention;
FIG. 13 is a side view showing a substantial part of an optical waveguide wavelength filter with a ring resonator according to another embodiment of the present invention;
FIG. 14 is a perspective view showing a substantial part of a variable wavelength filter according to the present invention;
FIG. 15 is a perspective view showing a substantial part of another embodiment of a variable wavelength filter according to the present invention;
FIG. 16 is a perspective view showing a substantial part of still another embodiment of a variable wavelength filter according to the present invention;
FIG. 17 is a plan view showing a substantial part of an embodiment of a conventional optical waveguide wavelength filter. with a ring resonator; and
FIG. 18 is a plan view showing a substantial part of another embodiment of a conventional optical waveguide wavelength filter with three ring resonators.

The reference numerals in the drawings represent the followings.
1, 1a, 1b: input-side optical waveguide
11, 11a, 11b: input bus
12, 12a, 12b: through bus
2, 2a, 2b: output-side optical waveguide
21, 21a, 21b: DROP bus
22, 22a, 22b: ADD bus
3, 3a, 3b, 3c, 3d: ring resonator
3aa, 3ab, 3ac: ring resonator
3ba, 3bb, 3bc: ring resonator
4: heating element
5: machine optic controlling means
   51: MEM piston
   52: thin plate
6: electro-optic element
   61: electrode

### Best Mode for Carrying Out the Invention

The embodiment of the present invention will be described in detail by showing the embodiments with reference to the attached drawings below.

### EXAMPLE

### Example 1

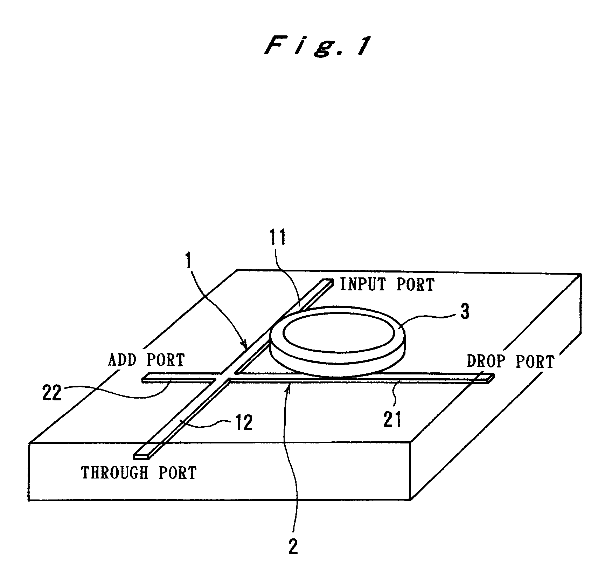

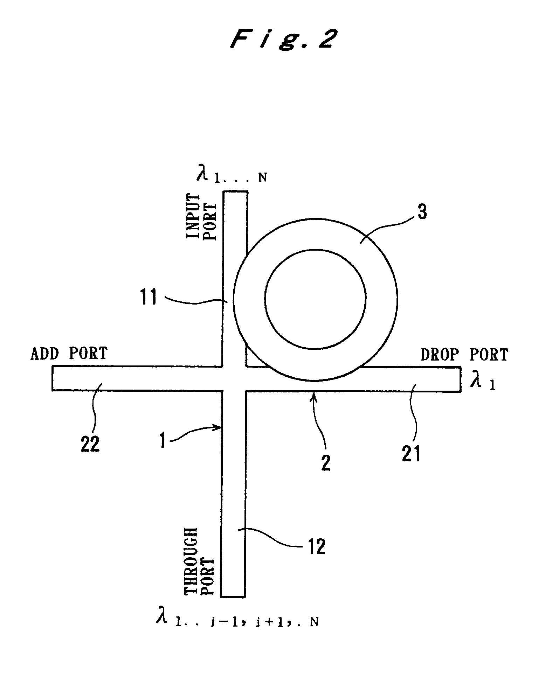

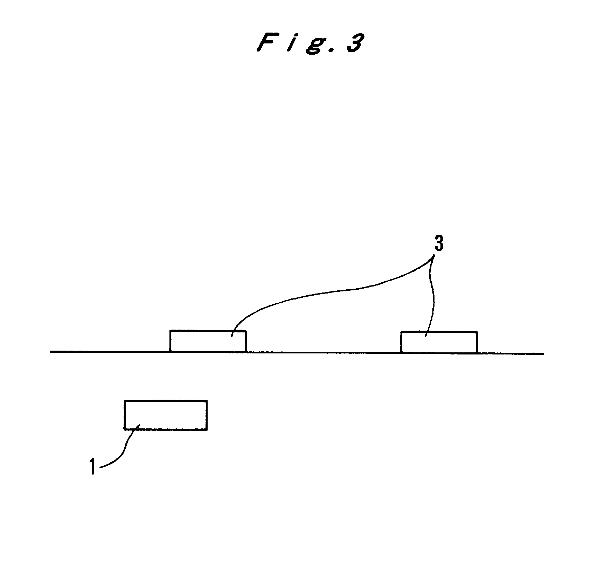

FIGS. 1 to 3 show a perspective view, a plan view and a cross sectional view of an optical waveguide wavelength filter with a ring resonator according to an embodiment of the present invention, respectively.

As shown in FIGS. 1 to 3 , in the optical waveguide wavelength filter with a ring resonator of the present invention, the input-side optical waveguide (1) and the output-side optical waveguide (2) intersect each other and the ring resonator (3) is superposed on the input-side optical waveguide (1) and the output-side optical waveguide (2).

More specifically, in the embodiments shown in FIGS. 1 to 3, the input-side optical waveguide (1) intersects the output-side optical waveguide (2) at a 90-degree angle. And, the ring resonator (3) is so constructed that a part thereof is superposed on an input bus (11) having an input port of the input-side optical waveguide (1) and a DROP bus (21) having a DROP port of the output-side optical waveguide (2).

As the input-side optical waveguide (1) and the output-side optical waveguide (2), for example, a buried-type channel optical waveguide may be employed. As the ring resonator (3), for example, a loaded-type stripe optical waveguide or a ridge-type optical waveguide may be employed. Then, each of the optical waveguides may have an optical confinement state different from each other.

Additionally, it is possible to realize an excellent optical coupling between the input-side optical waveguide (1). and the output-side optical waveguide (2) by using an optical waveguide having a small difference of the refractive index between its core and its clad as the input-side optical waveguide (1) and the output-side optical waveguide (2).

In the ring resonator (3), it is possible to raise a Q coefficient of the resonator to a value necessary for an excellent optical confinement by raising a refractive index of the core and lowering a refractive index of the clad.

Needless to say, it is not necessary for the input-side optical waveguide (1), the output-side optical waveguide (2) and the ring resonator (3) to have the same configurations, but they may have various configurations.

According to such an optical waveguide wavelength filter with a ring resonator of the invention, since the input-side optical waveguide (1) and the output-side optical waveguide (2) intersect each other, it is possible to easily construct a 1xN optical waveguide wavelength filter by connecting a plurality of the input-side optical waveguides (1) and the output-side optical waveguides (2) as described later. In addition, the optical coupling of the input- and output-side optical waveguides (1) (2) and the ring resonator (3) can be controlled by adjusting the spacing between the input- and output-side optical waveguides (1) (2) and the ring resonator (3).

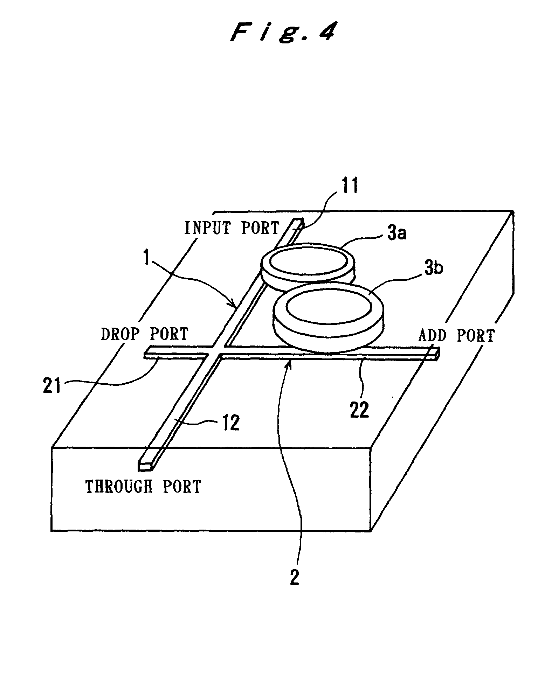

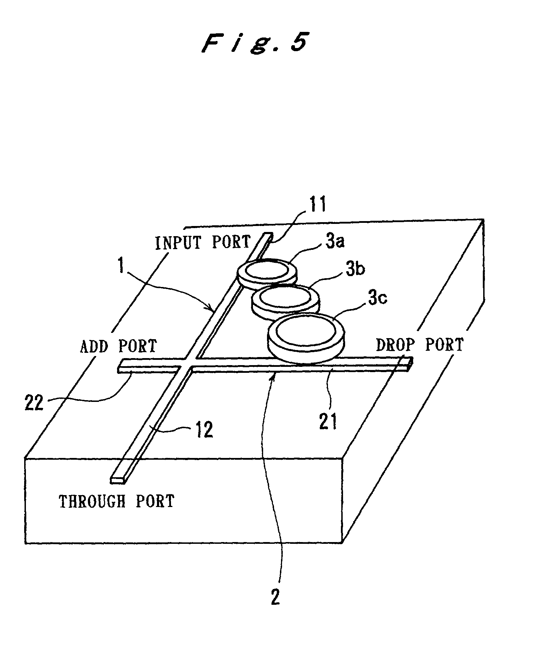

In the invention, a plurality of the ring resonators (3) coupled to each other may be provided as shown in FIG. 4 and FIG. 5. In the embodiment of FIG. 4, two ring resonators (3a) and (3b) are laminated on the input-side optical waveguides (1). and the output-side optical waveguides (2) in such a way that the ring resonator (3a) is superposed on the input bus (11) of the input-side optical waveguides (1) and the other ring resonator (3b) is superposed on an ADD bus (22) of the output-side optical waveguides (2). In the embodiment of FIG. 5, three ring resonators (3a), (3b) and (3c) are provided. In this arrangement, the first ring resonator (3a) is superposed on the input bus (11) of the input-side optical waveguides (1) and the other ring resonator (3c) is superposed on the DROP bus (21) of the output-side optical waveguides (2).

The ring resonators (3a), (3b)... may be identical or different to each other.

In the case that the ring resonators (3a), (3b) ... are different from each other, there is an advantage such that the resonation of the wavelength other than the resonance wavelength can be controlled. Therefore, only when all ring resonators (3a), (3b) ... resonate at the same time, the optical signals of the resonance wavelength are combined and separated. Further, due to a vernir effect, a free spectrum range (FSR) of the optical waveguide filter can be extremely enlarged.

On the other hand, in the case that the ring resonators (3a), (3b) ... are identical with each other, all ring resonators (3a), (3b) ... resonate with the same wavelength independently. However, when they are arranged so closely as to split the resonance peak, a mutual coupling occurs. A plurality of the resonance peaks in the resonance area comprises peaks with a complex mode of the coupling ring resonators (3a), (3b)....

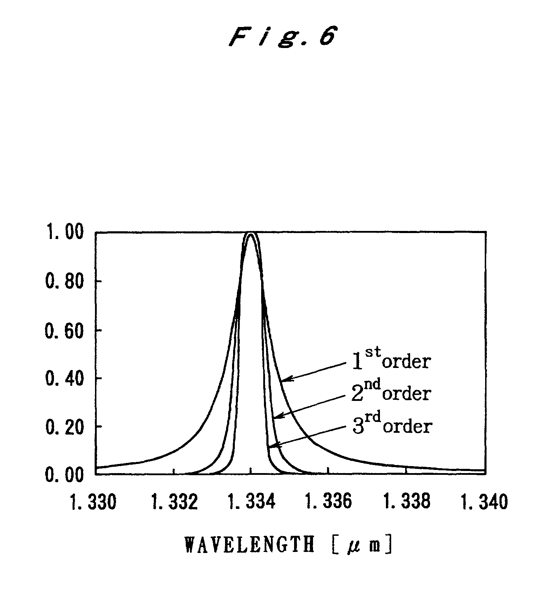

It is possible to adjust the optical coupling among the ring resonators (3a), (3b) ... such that the propagation constants of the complex mode become closer to each other. Therefore, a plurality of peaks comprise a single peak, however, they have a box-shape filter responses. FIG. 6 illustrates an example of a filter response in the case that three ring resonators (3a), (3b) and (3c) are provided as shown in FIG. 5. In this case, as shown in FIG. 6, the filter response has a box-shape. The more ring resonators (3) provided, the more the filter response becomes a box-shape.

### Example 2

It is possible to connect a plurality of the optical waveguide wavelength filters with a ring resonator of the invention described above, so that a 1xN optical waveguide wavelength filter can be realized.

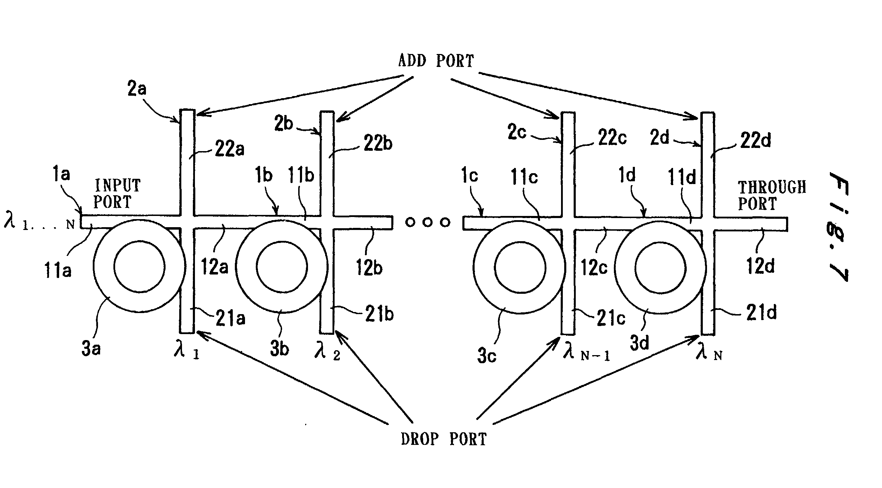

More specifically, for example, as illustrated in FIG. 7, a 1xN optical waveguide wavelength filter is configured with a plurality of the above-described optical waveguide wavelength filters with a ring resonator connected in such a manner that the through buses (12a), (12b) ... of the input-side optical waveguides (1a), (1b) ... and the input buses (11a), (11b) ... of the input-side optical waveguides (1b), (1c) ... adjacent to each other are connected. And, the resonance wavelengths of the ring resonators (3a), (3b) ... of the adjacent optical waveguide wavelength filters with a ring resonator are different from each other.

According to such a 1xN optical waveguide wavelength filter, when the input wavelength multiple optical signals λ_{1 ··· N}, which are entered from the input bus (11a) of the input-side optical wavelength (1a) of the optical waveguide wavelength filter with a ring resonator located at the farthest front end, are propagated through the input-side optical waveguides (1a), (1b) ..., the optical signals λ₁, λ₂, ... λ_{N-1}, λ_{N} having the wavelengths identical with the resonance wavelengths of the respective ring resonators (3a), (3b) ..., are separated into the DROP buses (21a), (21b) ... of the output-side optical waveguides (2a), (2b) ..., on which respective ring resonators (3a), (3b) ... are superposed. Similarly, when respective wavelengths are inputted from the ADD buses (22a), (22b) ... , the optical signals λ₁, λ₂, ... λ _{N-1}, λ_{N} having the wavelengths identical with the resonance wavelengths of respective ring resonators (3a), (3b) ... are combined in the through buses (12a), (12b) ....

Since this 1xN optical waveguide wavelength filter can be composed only by connecting the above-described optical waveguide wavelength filters with a ring resonator of -the invention, it is possible to make its size very small. For example, it is possible to realize, on a SiO₂ substrate with a refractive index of 1.45, a wavelength filter having a glass ring resonator with a radius of 14 µm, a FSR of 15 nm and a FWHM of less than 1 nm. Thus, for example, it is possible to configure, in the space of 1mm x 1mm, a 1x8 optical waveguide wavelength filter of a 100 GHz bandwidth, together with a coupler of the output optical fiber.

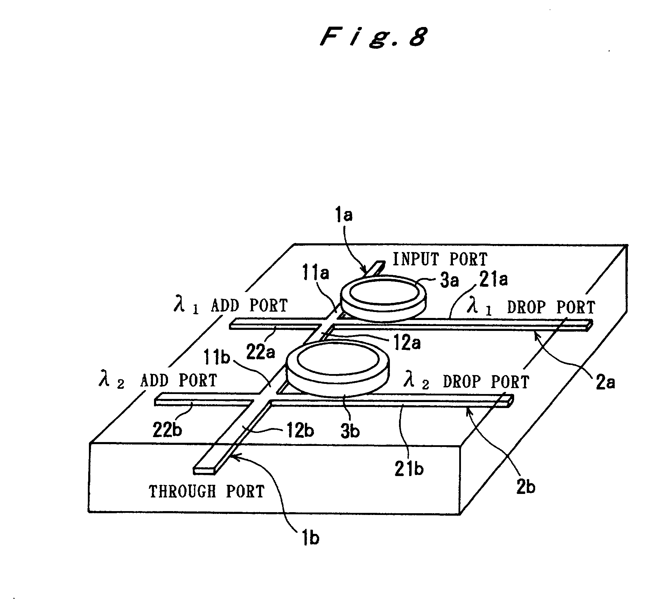

In the embodiment shown in FIG. 8, the 1xN optical waveguide wavelength filter comprises the two optical waveguide wavelength filters with a ring resonator connected to each other and is capable of individually combining and separating two optical signals having wavelengths, which are different from each other, by the ring resonators (3a) and (3b) having different resonance wavelengths.

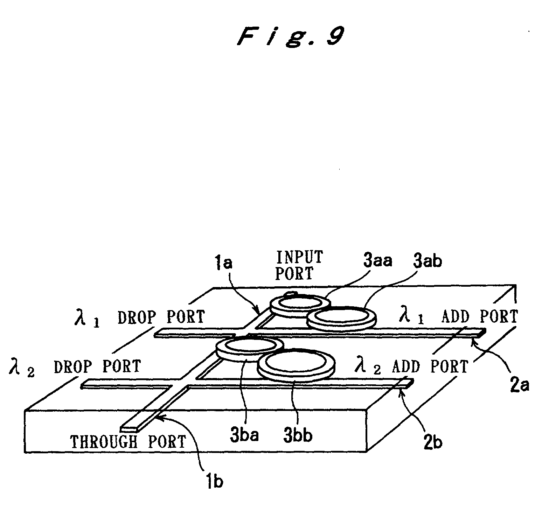

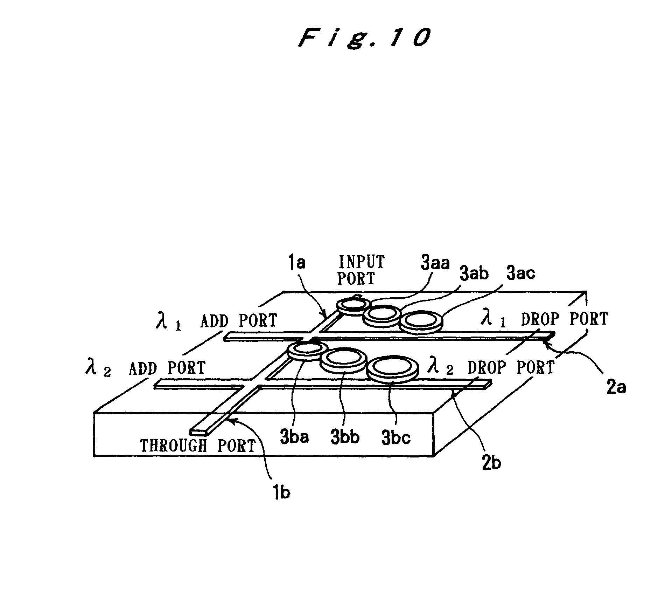

Alternatively, for example, as illustrated in FIG. 9 and FIG. 10, the 1xN optical waveguide wavelength filter may comprise the optical waveguide wavelength filters connected to each other, each having a plurality of ring resonators (3aa), (3ab), (3ac) ..., (3ba), (3bb), (3bc) ... as described above. In this case, since the filter response of each of the optical waveguide wavelength filters with a ring resonator has a box-shape as described above, the filter response of the 1xN optical waveguide wavelength filter becomes a box-shape. The locations of the DROP port and the ADD port of the output-side optical waveguide (2) depend on the number of the ring resonator (3).

### Example 3

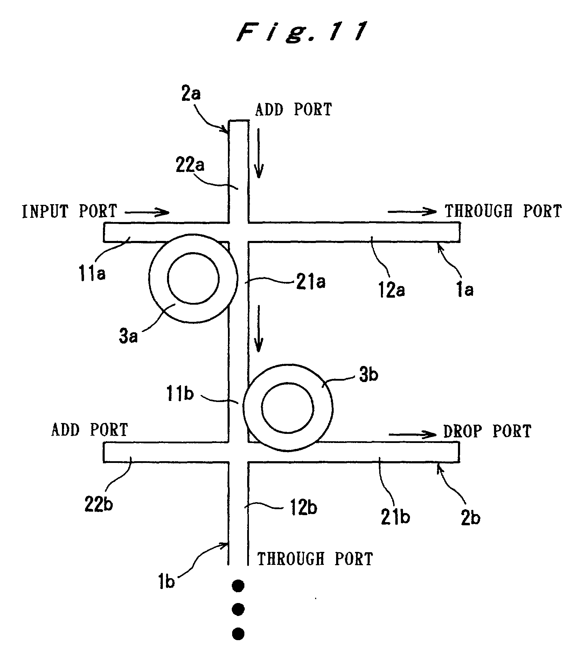

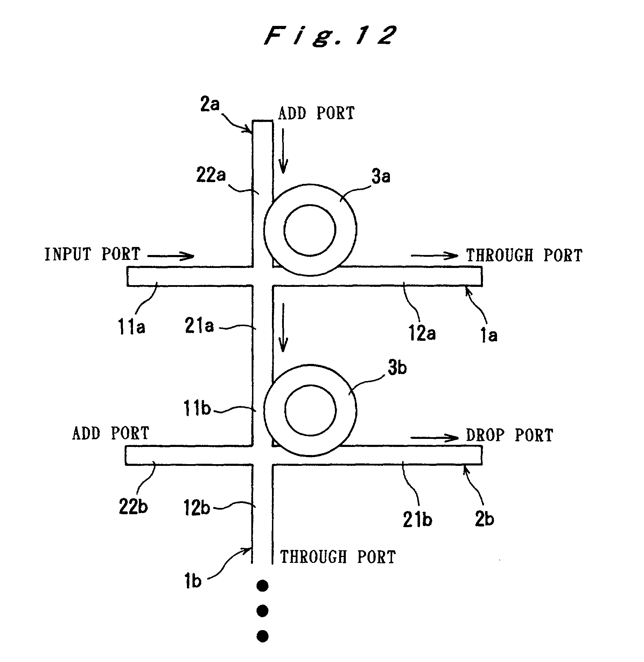

FIGS. 11 and 12 are plan views, each showing a substantial part of another embodiment of a 1xN optical waveguide wavelength filter of the invention.

The 1xN optical waveguide wavelength filter shown in FIGS . 11 and 12 is configured in such a manner that, in the above described 1xN optical waveguide wavelength filter shown in FIG. 7, the optical waveguide wavelength filter with a ring resonator, which is locatedat the farthest end, is connected with the optical waveguide wavelength filter with a ring resonator adjacent thereto by connecting the DROP bus (21a) of the output-side optical waveguide (2a) of the farthest end optical waveguide wavelength filter with a ring resonator and the input bus (11b) of the input-side optical waveguide (1b) of the adjacent optical waveguide wavelength filter with a ring resonator. In the embodiment shown in FIG. 11, the ring resonator (3a) of the farthest end optical waveguide wavelength filter with a ring resonator is superposed on the input bus (11a) and the DROP bus (21a). On the other hand, in the embodiment shown in FIG. 12, the same is superposed on the ADD bus (22a) and the through bus (12a).

In such a 1xN optical waveguide wavelength filter, the resonance wavelength of the ring resonator (3a) of the farthest end optical waveguide wavelength filter with a ring resonator and the free spectrum range (FSR) of the ring resonator (3b) of the adjacent optical waveguide wavelength filter with a ring resonator are different from each other, so that only one peak can be taken out from a plurality of peaks in a periodical filter property (so-called, a comb-type property) if only one resonance peak wavelength is identical. Alternatively, if the respective resonance wavelengths are identical with each other, the peaks fall into a range narrower than that in one stage. Furthermore, if the respective resonance wavelengths are slightly displaced from each other, the peaks become a box-shape.

### Example 4

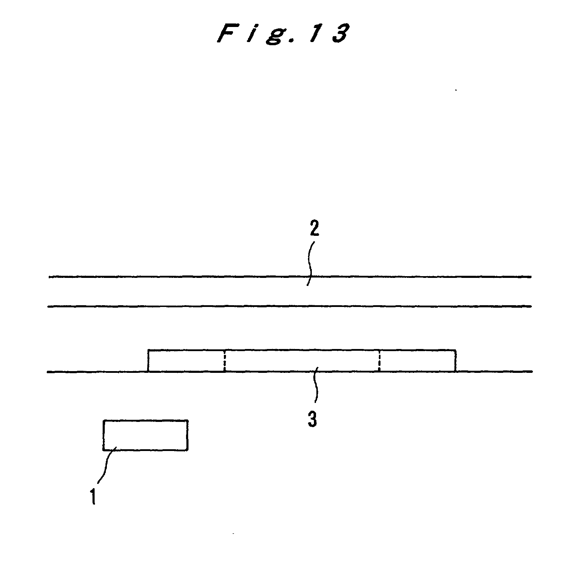

In the above described examples, each of the optical waveguide wavelength filters with a ring resonator are configured in such a manner that the ring resonator (3) is laminated on the input-side optical waveguide (1) and the output-side optical waveguide (2), which intersect each other on the same layer. In addition to this configuration, for example as shown in FIG. 13, they may be configured in such a manner that the ring resonator (3) is laminated on the input-side optical waveguide (1) of the lowest layer and the output-side optical waveguide (2) is laminated on this ring resonator (3). Certainly, a part of the ring resonator (3) is superposed on the input-side optical waveguide (1) and the output-side optical waveguide (2). Any of the input-side optical waveguide (1) and the output-side optical waveguide (2) may be in the upper layer or the lower layer.

### Example 5

In the above described optical waveguide wavelength filter with a ring resonator or a 1xN optical waveguide wavelength filter of the present invention, a core layer or a clad layer or both layers of the respective optical waveguides (1) and (2) may be composed of a material having an electro-optic effect or a material having a thermo-optic effect or a material having a photoelastic effect. And, by making the resonance wavelength of the ring resonator (3) variable in accordance with the control of the exterior electric field or the control of the temperature or the control of the exterior stress, a variable wavelength filter and an optical switch can be realized.

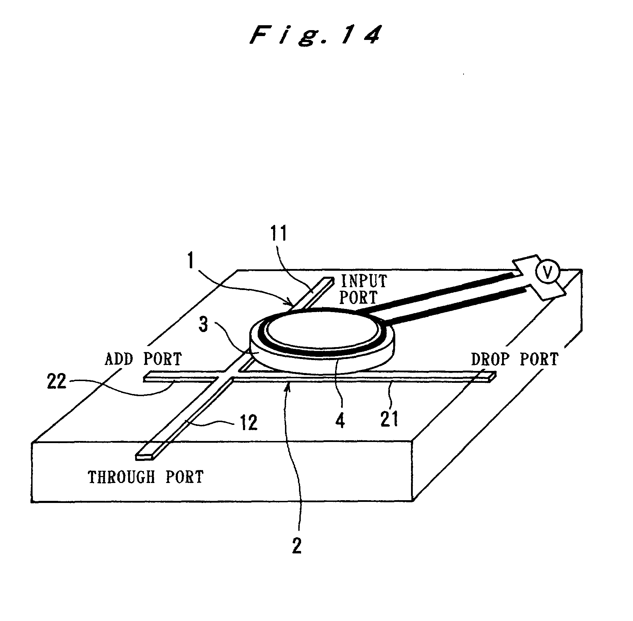

FIGS. 14 to 16 are perspective views, each illustrating a substantial part of one embodiment of a variable wavelength filter according to the present invention. In each embodiment, the core layer or the clad layer or both layer of the input-side optical waveguide (1) and the output-side optical waveguide (2) are composed of a material having an electro-optic effect or a material having a thermo-optic effect or a material having a photoelastic effect.

In the embodiment shown in FIG. 14, a heating element (4) as a thermo controlling means is provided on the ring resonator (3), in order to control the resonance wavelength of the ring resonator (3). In this case, to prevent the Q value of the ring resonator (3) from being decreased due to the heating element (4), it is preferable that a buffer layer with a low refractive index is provided between the ring resonator (3) and the heating element (4). Alternatively, the heating element (4) may be provided on a covering layer (made of SiO₂ or the like, for example) of the ring resonator (3). In this case, it is not necessary to place the heating element (4) directly above the ring resonator (3). It may be configured in a ring shape surrounding the ring resonator (3), for example.

On the other hand, since the ring resonator (3) has a high sensitivity property, it is possible to adjust the resonance frequency by providing the metal plate or the dielectric thin plate on the ring resonator (3).

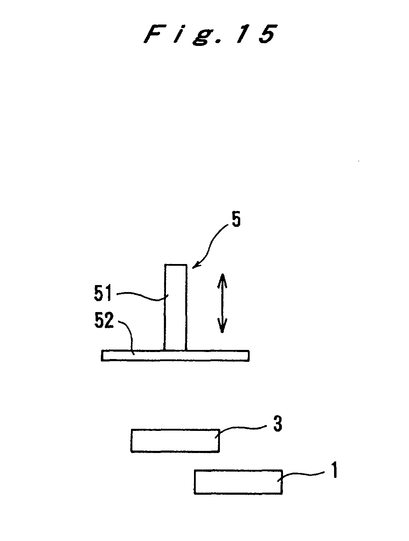

In the variable wavelength filter shown in FIG. 15, a machine optic controlling means (5) having a micro electronic machine (MEM) piston (51) and a thin plate (52) made of a glass or a polymer, which is held by the MEM piston (51), is provided above the ring resonator (3). The thin plate (52) rises and falls above the ring resonator (3) in accordance with a piston movement of the MEM piston (51). Accordingly, by controlling the spacing between the changing ring resonator (3) and the thin plate (52), the resonance frequency of the ring resonator (3) can be controlled.

It is preferable that the surface of the ring resonator (3) is entirely covered with the thin plate (52) in order to prevent the ring resonator (3) from being disarranged unevenly and causing refraction.

Additionally, in the case where the thin plate (52) is made of a polymer, the polymer-made thin plate (52) can always be touched with the ring resonator (3), so that it is possible to lower the refractive index of the polymer-made thin plate (52) than that of the ring resonator (3). Then, by applying pressure to this polymer-made thin plate (52), it is possible to control the resonance wavelength of the ring resonator (3) in accordance with the photoelastic effect of the polymer having a refractive index changeable with the pressure.

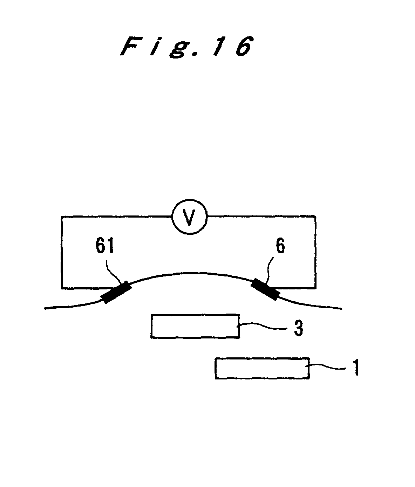

In the variable wavelength filter shown in FIG. 16, the resonance wavelength of the ring resonator (3) is made variable by the electro-optic element (6) having a refractive index electrically variable. For example, this electro-optic element (6) as the electro-optic controlling means is composed of a substance such as an electro-optic polymer, which is controlled electrically by the voltage applied through the electrode (61), and is provided on the ring resonator (3).

Although the variable wavelength filter is employed in the above-described examples in the embodiment 5, similarly, an optical waveguide optical switch can be realized by adjusting the phase or the like of the ring resonator.

The present invention is not limited to the above-described examples but various modes can be applied in detail to the present invention.

### Industrial Applicability

As described in detail above, the present invention provides a novel optical waveguide wavelength filter with a ring resonator capable of easily realizing a 1xN optical waveguide wavelength filter. The present invention also provides a 1xN optical waveguide wavelength filter having a small size and an excellent filter response, which is composed of the novel optical waveguide wavelength filter with a ring resonator. The present invention can further realize a variable wavelength filter and an optical switch using these optical waveguide wavelength filters. Accordingly, it is possible to realize the optical communication having a much larger capacity and a much higher function.

## Claims

1. An optical waveguide wavelength filter with a ring resonator, in which an ADD/DROP operation between an input-side optical waveguide and an output-side optical waveguide through the ring resonator is performed, wherein the input-side optical waveguide intersects the output-side optical waveguide, and the ring resonator is superposed on the input-side optical waveguide and the output-side optical waveguide.

2. The optical waveguide wavelength filter with a ring resonator according to claim 1, wherein the input-side optical waveguide intersects the output-side optical waveguide at a 90-degree angle.

3. The optical waveguide wavelength filter with a ring resonator according to claim 1 or claim 2, wherein a plurality of ring resonators coupled to each other is provided.

4. A 1xN optical waveguide wavelength filter, comprising a plurality of the optical waveguide wavelength filters with a ring resonator according to any one of claims 1 to 3, each connected in such a manner that a through bus and an input bus of the adjacent optical waveguide wavelength filters with a ring resonator are connected to each other, wherein the resonance wavelengths of the ring resonators of the optical waveguide wavelength filters with a ring resonator are different from each other.

5. The 1xN optical waveguide wavelength filter according to claim 4, wherein the optical waveguide wavelength filter with a ring resonator located at the farthest end is connected with the other optical waveguide wavelength filter with a ring resonator adjacent thereto by connecting a DROP bus of the output-side optical waveguide of the farthest end optical waveguide wavelength filter with a ring resonator and an input bus of the input-side optical waveguide of the adjacent optical waveguide wavelength filter with a ring resonator, and the resonance wavelength of the ring resonator of the farthest end optical waveguide wavelength filter with a ring resonator and that of the adjacent optical waveguide wavelength filter with a ring resonator are identical or different to each other.

6. The optical waveguide wavelength filter with a ring resonator according to any one of claims 1 to 3 or the 1xN optical waveguide wavelength filter according to claim 4 or claim 5, wherein a core layer or a clad layer or both layers of the respective optical waveguides are composed of a material having an electro-optic effect or a material having a thermo-optic effect or a material having a photoelastic effect, and the resonance wavelength of the ring resonator is variable in accordance with the control of the exterior electric field or the control of the temperature or the control of the exterior stress .

7. An optical switch which is configured by the optical waveguide wavelength filter with a ring resonator according to any one of claims 1 to 3 or the 1xN optical waveguide wavelength filter according to claim 4 or claim 5, wherein a core layer or a clad layer or both layers of the respective optical waveguides are composed of a material having an electro-optic effect or a material having a thermo-optic effect or a material having a photoelastic effect, and the resonance wavelength of the ring resonator is variable in accordance with the control of the exterior electric field or the control of the temperature or the control of the exterior stress.
